# EUROPÄISCHE PATENTANMELDUNG

(11) **EP 1 188 363 A1**
(43) Veröffentlichungstag der Anmeldung: **20.03.2002**
(21) Anmeldenummer: 01122237.9
(22) Anmeldetag: 17.09.2001
(51) Int. Cl.: A01D 34/64, A01D 34/71, A01D 43/063, A01B 51/02

(54) **Rahmen einer landwirtschaftlichen Maschine**

(30) Priorität: 16.09.2000 DE 20016122 U
(71) Anmelder: Wiedenmann GmbH, 89192 Rammingen (DE)
(72) Erfinder:
(74) Vertreter: Flügel, Otto, Dipl.-Ing.

(57) **Zusammenfassung**

Die Erfindung betrifft eine fahrbare Bodenbearbeitungsmaschine mit einem einen Fahrzeugrahmen aufweisenden Fahrelement (1) - selbstfahrend oder nach Art eines Anhängers ausgebildet - und mit einem einen Geräterahmen aufweisenden Bodenpflegegerät (3). Das auf dem Fahrzeugrahmen (2) - gegebenenfalls auswechselbar und gegen andere Geräte unterschiedlicher Arbeitsweise austauschbar - gehalten ist. Diese Bodenbearbeitungsmaschine ist zu dem Zweck, eine solche aus Fahrelement und zumindest Teilen eines Bodenpflegegerätes zusammengesetzte Maschineneinheit mit weniger Material und damit leichter sowie in der Konstruktion sparsamer auszubilden, derart beschaffen, dass der Geräterahmen durch mindestens einen Geräterahmenteil (11) gebildet ist, der in Anbringung an dem Fahrelement (1) dessen Mitausnutzung für die Aufnahme der durch den Betrieb des Bodenpflegegerätes (3) verursachten Kräfte und Drehmomente bedingt.

## Beschreibung

Die Erfindung betrifft eine Bodenbearbeitungsmaschine, die ein fahrbares Grundelement selbstfahrend oder nach Art eines Anhängers ausgebildet und ein Bodenpflegegerät aufweist, das auf dem Rahmen des Fahrelementes gegebenenfalls auswechselbar und gegen andere Geräte unterschiedlicher Arbeitsweise austauschbar gehalten ist. Bodenpflegegeräte der hier in Rede stehenden Art werden vielfach von Herstellern zur Verfügung gestellt, die mit denen des fahrbaren Grundelementes nicht übereinstimmen. Diese Bodenpflegegeräte sind im übrigen als Teileinheiten ausgebildet, beispielsweise steht ein an dem Fahrelement anzuordnendes Mähgerät nur über einen Transportschlauch für das gemähte Gut mit dem Eingang eines Sauggebläses in Verbindung, dessen Ausgang in einen Sammelbehälter für das gemähte Gut mündet, wobei das Sauggebläse - gegebenenfalls mit eigenem Antrieb - mit dem Sammelbehälter, dessen Position zu dem tragenden Fahrelement durch eine Lenkereinrichtung oder dergleichen höhenveränderlich ist, um zwischen einer Belade- und Entladestellung zu unterscheiden, eine Geräteeinheit bilden kann. Dieses Beispiel der in Rede stehenden Bodenpflegegeräte lässt sich in alle geeigneten Gerätetypen unterschiedlicher Pflegeverwendung abwandeln.

Bisherige Maschinen dieser Art sind dadurch geprägt, dass das auf dem Fahrzeugrahmen des fahrbaren Elementes aufgesetzte Bodenpflegegerät als eigenständige Einheit gesehen und konstruktiv folgerichtig mit einem eigenständigen Geräterahmen versehen ist, der auf dem Fahrzeugrahmen aufgesetzt wird, zumindest ein Teil der Bauelemente des Bodenpflegegerätes in sich tragfähig aufnimmt und deren im Zuge der Arbeitsweise auftretenden Kraft- und Drehmomentkomponenten beherrscht. Fahrzeugrahmen und Geräterahmen sind daher insoweit eigenständige und bis auf die Tragfunktion unabhängig voneinander durch ihre jeweils zugeordneten Betriebsfunktionsteile belastete Gegenstände.

Mit der Erfindung soll erreicht werden, eine solche, aus Fahrelement und zumindest Teilen eines Bodenpflegegerätes zusammengesetzte Maschineneinheit mit weniger Material und damit leichter sowie in der Konstruktion sparsamer auszubilden.

Dies wird erfindungsgemäß dadurch erreicht, dass der Geräterahmen durch mindestens einen Geräterahmenteil gebildet ist, der in Anbringung an dem Fahrelement dessen Mitausnutzung für die Aufnahme der durch den Betrieb des Bodenpflegegerätes (3) verursachten Kräfte und Drehmomente bedingt.

Es wird also von der Vorstellung eines selbständig tragenden Geräterahmens abgegangen und der Geräterahmen nur in Form von verstrebungsartigen Rahmenteilen - ein oder mehrere - ausgebildet ist, derart, dass durch die Verstrebung bzw. diesen Teilrahmen des Bodenpflegegerätes die Festigkeit und Formstabilität des Fahrzeugrahmens mit für die Aufnahme der von den angeschlossenen Bauteilen des Bodenpflegegerätes ausgehenden Kraft- und Drehmomentkomponenten ausgenutzt wird.

Der mit dem Fahrzeugrahmen zu verbindende nur noch Teilbereich des Geräterahmens ist demnach für sich gesehen nicht in der Lage die Kraft- und Bewegungskomponenten der an ihm direkt oder indirekt gehaltenen Bauteile des Bodenpflegegerätes aufzunehmen; dies ist nur nach Verbund mit dem Fahrzeugrahmen der Fall.

Dieser gegenüber dem herkömmlichen Geräterahmen nur noch verbleibende Teilrahmen kann ein- oder mehrstückig ausgebildet sein, beispielsweise können sich zwei Rahmenteile jeweils längsseitig des Fahrelementes erstrecken, vorzugsweise wird jedoch nur ein Rahmenteil an einer der Fahrelementlängsseiten angeordnet, und zwar derart, dass es zwei Fahrzeugrahmenbereiche versteifend miteinander verbindet, wobei an einem dieser Fahrzeugrahmenbereiche ein hinsichtlich statischer wie dynamischer Belastung maßgeblicher Bauteil des Bodenpflegegerätes abgestützt ist. Konkret bzw. auf das eingangs erwähnte Beispiel angewendet bedeutet dies, dass ein an dem bodenseitigen Fahrzeugrahmenbereich ausgebildeter aufstrebender Bereich - beispielsweise in Gestalt eines Überrollbügels -, an dem ein höhenveränderlich versetzbarer Sammelbehälter abgestützt ist, mittels des Geräterahmenteils an dem Bodenbereich des Fahrzeugrahmens verstrebend abgestützt ist, beispielsweise unter Bildung eines Strebendreiecks.

Manche der in Rede stehenden Geräte bilden nicht notwendig oder nur in bestimmten Betriebsphasen eine von der örtlichen Zuordnung her gesehen eine bauliche Einheit. In bevorzugter Ausführung kann der - ein- oder mehrteilige - Geräterahmenbereich neben seiner verstrebenden Wirkung zusätzlich eine Haltefunktion für einzelne Bauelemente des Bodenpflegegerätes ausüben, gegebenenfalls mit zusätzlicher verstrebender Wirkung. Am eingangs genannten Ausführungsbeispiel orientiert bedeutet dies den Anschluss des Gebläsesaugers an den Geräterahmenbereich.

In weiterhin bevorzugter Ausführung sind an dem erfindungsgemäß nur noch als Teilbereich ausgebildeten Geräterahmen sämtliche im Rahmenbereich zu halternde Bauelemente derart angeordnet, dass nach entsprechendem Lösen der Verbindungen zum Fahrzeugrahmen der Geräterahmenbereich mit den verbundenen Bauteilen des Bodenpflegegerätes als Einheit von dem Fahrelement getrennt werden kann, beispielsweise durch Herausfahren des Fahrzeugelementes aus dem insoweit angehobenen Bereich der gelösten Einheit aus Rahmenbereich und zugeordnetem Pflegegerät.

Ausgehend von der herkömmlichen Vorstellung eines auf die Bauelemente des Pflegegerätes gesehen eigenständigen Rahmenfunktion kann der erfindungsgemäß vorgesehene Geräterahmenbereich als demgegenüber "verkümmert" bzw. nur noch als Hilfsrahmen bezeichnet werden.

In den beiliegenden Zeichnungen ist ein Ausführungsbeispiel einer erfindungsgemäß ausgebildeten Bodenpflegemaschine gezeigt, die ein selbstfahrendes, d.h. motorgetriebenes Fahrzeugelement 1 mit einem Fahrzeugrahmen 2 sowie ein insgesamt mit 3 bezeichnetes Bodenpflegegeräteensemble aufweist, das vorliegend aus einem über ein Hebelgestänge 4 hydraulisch höhenversetzbaren Sammelbehälter 5 und einem Sauggebläse 6 mit den dazu bekannter Maßen vorzusehenden Übergangselementen besteht; das an den Eingang des Sauggebläse 6 angeschlossene weitere Bauteil des Bodenpflegegerätes 3 - beispielsweise ein Sichelmähgerät, ein Laubaufnahmegerät oder dergleichen - ist nicht dargestellt. Der Fahrzeugrahmen 2 umfasst einen bodennahen, d.h. sich mehr oder weniger parallel zum zu befahrenden Boden erstreckenden Rahmenbereich 7, an dem fest angeordnet ein sich zwischen den beiden Fahrzeugachsen etwa vertikal erstreckender Rahmenbereich ausgebildet ist, der im vorliegenden Fall als Bügel 8 - beispielsweise in Funktion eines Überrollbügels -, ausgebildet ist. An diesem Bügel ist der rahmenseitige Anschluss von Lenkern 9 gehalten, die anderen Endes an dem Sammelbehälter 5 des Bodenpflegegerätes 3 angelenkt sind und ein Lenkerparallelogramm oder ähnlicher Führungsbahn bedingender Lenkeranordnung bilden, die den Hubweg des Sammelbehälters 5 gegenüber dem Fahrzeugrahmen 2 unter Beaufschlagung eines Hydraulikzylinders 10 festlegen. Zwischen dem bodenseitigen Fahrzeugrahmenbereich 7 und dem aufstrebenden Rahmenbereich 8 ist - hier nur einer der Längsseiten des Fahrelementes zugeordnet - ein Geräterahmenbereich 11 angeordnet, der die Bereiche 7 und 8 des Fahrzeugrahmens verstrebend zwischen diesen angeordnet und befestigt gehalten ist. Damit wird die Formsteifigkeit des Fahrzeugrahmens zwischen seinen Bereichen 7 und 8, die etwa rechtwinklig zueinander verlaufen, während der Geräterahmenbereich 7 diesen rechten Winkel als Hypotenuse übergreift, derart formstabilisiert, dass nunmehr insoweit durch den Fahrzeugrahmen die vom Sammelbehälter und dessen Betrieb ausgehenden Belastungen aufgenommen werden.

Im vorliegenden Fall ist die fahrzeugrahmenseitige Halterung des Lenkergestänges unmittelbar mit dem aufstrebenden bügelförmigen Fahrzeugrahmenbereich 8 verbunden, auch das rahmenseitige Ende des hydraulischen Hubzylinders 10 ist an diesem Fahrzeugrahmenteil abgestützt. Der Anschluss des Geräterahmenteils 11 an dem vertikalen Fahrzeugrahmenbereich 8 ist hier darunter angeordnet, insoweit wird die Verbindung zu dem Hubgestänge des Sammelbehälters indirekt über einen kurzen Rahmenbereich des Rahmenteils 8 bewerkstelligt. Es könnte auch der Geräterahmenteil 11 unmittelbar an die fahrzeugrahmenseitigen Lagerungen der Lenker des Hubmechanismus für den Sammelbehälter angeschlossen sein.

Der aus den Zeichnungen ersichtliche Geräterahmenteil 11 geht von der Abstützung an dem bodenseitigen Fahrzeugrahmenbereich 7 aus gesehen über den Anschluss an dem vertikalen Rahmenbereich 8 hinaus bogenförmig zu dem Sauggebläse 6 und ist mit diesem haltend verbunden. Das Sauggebläse ist andererseits an den bodennahen Bereich 7 des Fahrzeugrahmens angeschlossen, so dass eine abstandstreue Zuordnung zu dem antreibenden Motor des Fahrzeugelementes sichergestellt ist. Auf diese Weise ist an dem Geräterahmenteil 11 das Sauggebläse gehalten, und es wird zusätzlich über dieses eine weitere Verstrebung zwischen den Fahrzeugrahmenbereichen 7 und 8 erreicht.

Nach Lösen der Verbindungen zwischen Pflegegerät und Fahrelement lässt sich letzteres nach entsprechendem Beabstanden zum Zwecke des Austausches - auch Auswechseln mit anderen Aufbauten - entfernen. Sofern die Verbindung zwischen dem Geräterahmenteil 11 und dem Lenkergestänge entsprechend fest ist, entsteht eine in diesem Sinne selbständig handhabbare Einheit aus Geräterahmenteil 11, Sammelbehälter 5 mit der Hublenkereinrichtung sowie dem Sauggebläse 6.

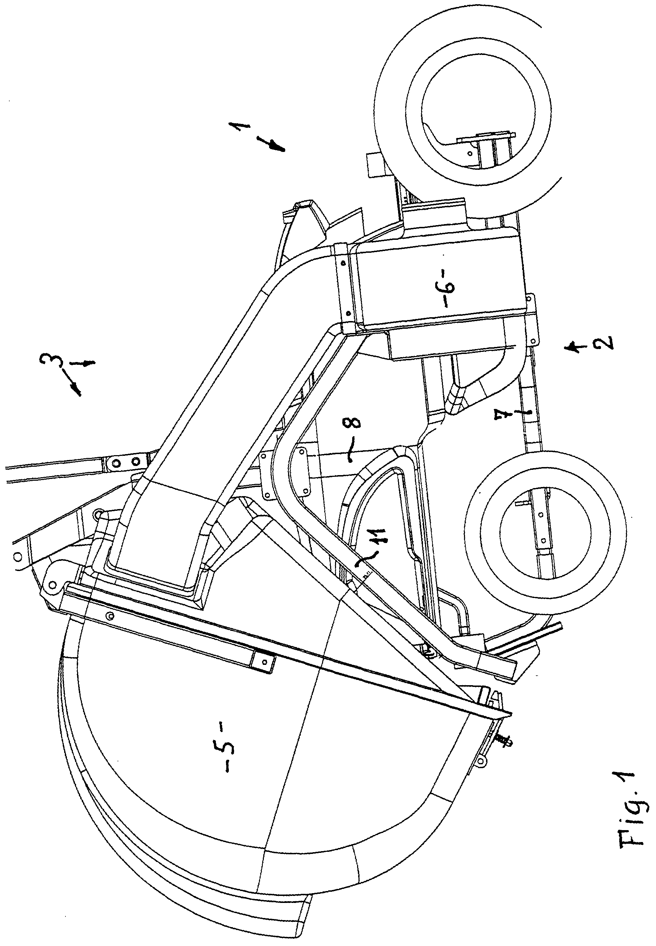

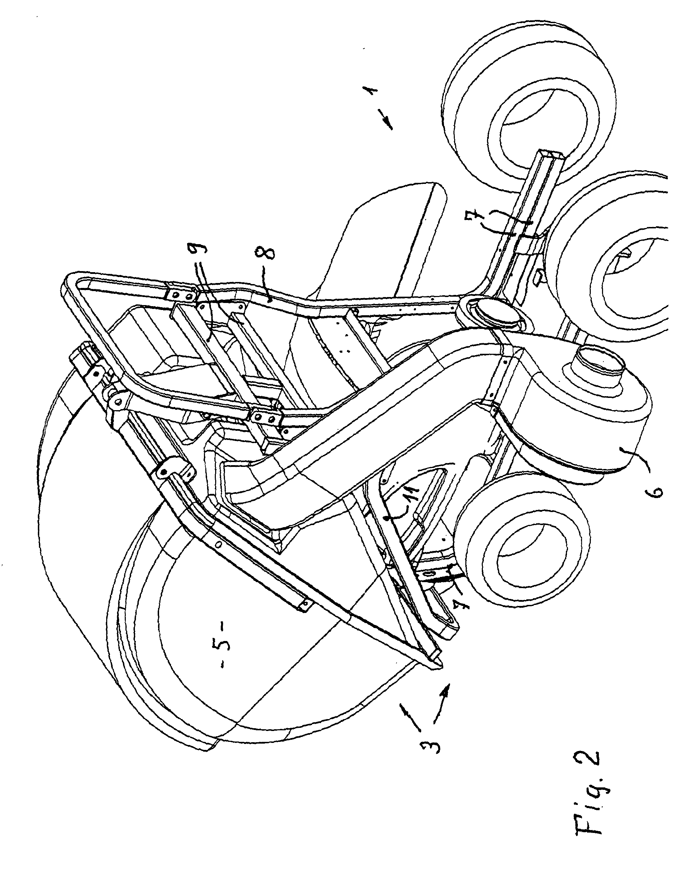

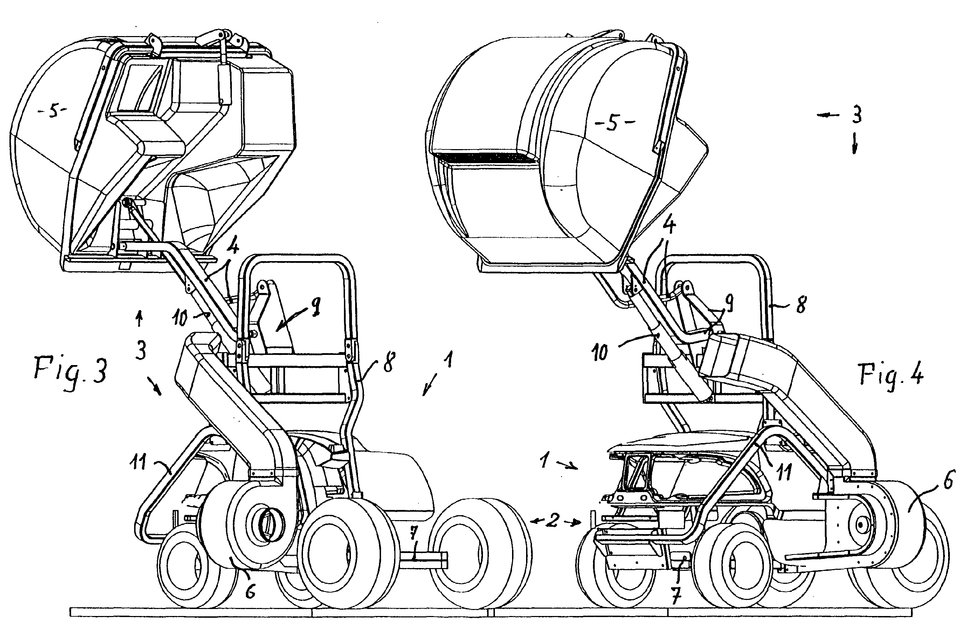

## Patentansprüche

1. Fahrbare Bodenbearbeitungsmaschine mit einem einen Fahrzeugrahmen aufweisenden Fahrelement (1) - selbstfahrend oder nach Art eines Anhängers ausgebildet - und mit einem einen Geräterahmen aufweisenden Bodenpflegegerät (3), das auf dem Fahrzeugrahmen (2) - gegebenenfalls auswechselbar und gegen andere Geräte unterschiedlicher Arbeitsweise austauschbar- gehalten ist,
**dadurch gekennzeichnet,**
**dass** der Geräterahmen durch mindestens einen Geräterahmenteil (11) gebildet ist, der in Anbringung an dem Fahrelement (1) dessen Mitausnutzung für die Aufnahme der durch den Betrieb des Bodenpflegegerätes (3) verursachten Kräfte und Drehmomente bedingt.

2. Maschine nach Anspruch 1,
**dadurch gekennzeichnet,**
**dass** sich der Geräteteil (11) hinsichtlich seines Verlaufes in Fahrtrichtung nur in einem der beiden Längsseitenbereiche (7) des Fahrelementes (1) erstreckt.

3. Maschine nach Anspruch 1 oder 2,
**dadurch gekennzeichnet,**
**dass** der Fahrzeugrahmen (2) bodennahe, sich etwa parallel zum zu befahrenden Boden und im wesentlichen in Fahrtrichtung erstreckende Rahmenbereiche (7) sowie einen damit fest verbundenen weiteren Rahmenbereich (8) aufweist.

4. Maschine nach Anspruch 3,
**dadurch gekennzeichnet,**
**dass** der weitere Rahmenbereich (8) zwischen den Fahrelementachsen angeordnet ist.

5. Maschine nach Anspruch 3 oder 4,
**dadurch gekennzeichnet,**
**dass** der weitere Rahmenbereich (8) sich etwa vertikal erstreckend ausgebildet ist.

6. Maschine nach einem der Ansprüche 3 bis 5,
**dadurch gekennzeichnet,**
**dass** der weitere Rahmenteil als Bügel (8) nach Art eines Überrollbügels ausgebildet ist.

7. Maschine nach einem der Ansprüche 3 bis 6,
**dadurch gekennzeichnet,**
**dass** an dem weiteren Rahmenteil (8) ein höhenveränderlich versetzbarer Sammelbehälter (5) abgestützt ist.

8. Maschine nach einem der Ansprüche 1 bis 7,
**dadurch gekennzeichnet,**
**dass** der weitere Rahmenteil (8) durch den Geräterahmenteil (11) an dem bodenseitigen Bereich des Fahrzeugrahmens (7) verstrebend abgestützt ist.

9. Maschinen nach einem der Ansprüche 1 bis 8,
**dadurch gekennzeichnet,**
**dass** der Geräterahmenteil (11) unter Bildung eines Strebendreiecks an dem Fahrzeugrahmen (7) und dem weiteren Rahmenteil (8) gehalten ist.

10. Maschinen nach einem der Ansprüche 1 bis 9,
**dadurch gekennzeichnet,**
**dass** der Geräterahmenteil (11) in den rückseitigen oder frontseitigen Rahmenbereich des Fahrzeugrahmens (7) mündend oder diesen übergreifend abgebogen ist.
